# EUROPEAN PATENT APPLICATION

(11) **EP 2 644 567 A1**
(43) Date of publication of application: **02.10.2013**
(21) Application number: 11842868.9
(22) Date of filing: 18.10.2011
(51) Int. Cl.: C01B 33/16

(54) **METHOD FOR PRODUCING POROUS MONOLITH**

(30) Priority: 24.11.2010 JP 2010261030
(71) Applicant: Renaissance Energy Investment Co., Ltd., Kyoto-shi Kyoto 615-8245 (JP)
(72) Inventor: IPPOMMATSU, Masamichi, Kyoto-shi Kyoto 615-8245 (JP); MIYAMOTO, Riichi, Kyoto-shi Kyoto 615-8245 (JP)
(74) Representative: Treeby, Philip David William
(86) International application number: PCT/JP2011/073890
(87) International publication number: WO 2012/070333

(57) **Abstract**

A method for producing a monolithic porous body having a trimodal hierarchical porous structure by a sol-gel method is provided. The method includes a sol preparation step of preparing a precursor sol, a gelation step of inducing a sol-gel transition and a phase separation in parallel on the precursor sol in a gelation container housing a template obtained by configuring organic polymer fibers into an aggregation having a three-dimensional spread, to form a gel made of a co-continuous structure of a hydrogel phase and a solvent phase, in the space around the organic polymer fibers, and a removal step of removing the solvent phase and the organic polymer fibers individually or simultaneously from the gel. The organic polymer fibers have a structure in which the cross section perpendicular to the longitudinal direction is contractible while the extension in the longitudinal direction is restricted. Template holes, through-pores and smallpores are formed in voids remaining after the removal of the organic polymer fibers, voids remaining after the removal of the solvent phase, and a skeleton of the hydrogel phase, respectively.

## Description

### TECHNICAL FIELD

The present invention relates to a method for producing a monolithic porous body having a trimodal hierarchical porous structure by a sol-gel method.

### BACKGROUND ART

In a monolithic porous body of an inorganic material, it is possible to synthesize a monolithic porous body of a two-stage hierarchical porous structure having two different sized pores, through-pores and smallpores, by controlling the reaction rate of spinodal decomposition sol-gel transition and utilizing a dissolution-reprecipitation reaction by a hydrothermal treatment reaction.

There is an example of synthesizing a monolithic porous body having a trimodal hierarchical porous structure in a silica single material and a zeolite mixture such as silica-alumina by a single step, but there is still a big hurdle in independently controlling all pores (for example, refer to Non-Patent Documents 1 to 5 described below). In addition, there is an example of preparing a monolithic porous body having a trimodal hierarchical porous structure by coating a polyurethane foam surface with nanomicroparticles, and sintering the coated polyurethane form to remove the polyurethane foam (for example, refer to Non-Patent Documents 6 and 7 described below). However, since the thickness of skeleton, the size of pores, and the silica density are dependent on the structure of the used polyurethane foam, there is a limitation in strictly controlling all pores.

In addition, as another method for controlling a three-dimensional network structure, although limited to the example of the two-stage hierarchical porous structure, there is a method of obtaining a hierarchical porous structure for a monolithic porous body synthesized by a sol-gel method, wherein organic polymer fibers or the like are used as a template in a sol, the organic polymer fibers are removed by sintering or the like after gelation, and the obtained voids are utilized as pores. For example, there is a monolithic porous body of silica utilizing as pores the void formed by filling a sol into a polyurethane foam, changing the sol into a gel, and removing the polyurethane foam by sintering (for example, refer to Non-Patent Document 8 described below), and a monolithic porous body of silica utilizing as pores the voids obtained by using polystyrene particles as a template and removing them in the same manner (refer to Patent Document 1 described below). These are utilized as a method of forming a three-dimensional network structure of a monolithic porous body by utilizing organic polymer fibers or the like as a template and removing them. However, an example that is applied to the trimodal hierarchical porous structure is not found.

### PRIOR ART DOCUMENT

### PATENT DOCUMENT

Patent Document 1: Japanese Patent Application Laid-Open No. 2007-145636

### NON-PATENT DOCUMENT

Non-Patent Document 1: Y. Tokudome, et al., "Synthesis of high-silica and low-silica zeolite monoliths with trimodal pores", Microporous and Mesoporous Materials, 132 (2010), pp. 538-542
Non-Patent Document 2: J-H. Smatt, et al., "Versatile Double-Templating Synthesis Route to Silica Monoliths Exhibiting a Multimodal Hierarchical Porosity", Chem. Mater. 2003, 15, pp. 2354-2361
Non-Patent Document 3: S. Ungureanu, et al., "One-Pot Syntheses of the First Series of Emulsion Based Hierarchical Hybrid Organic-Inorganic Open-Cell Monoliths Possessing Tunable Functionality (Organo-Si (HIPE) Series)", Chem. Mater. 2007, 19, pp. 5786-5796
Non-Patent Document 4: F. M. Sayler, et al., "Correlation between Electrical Conductivity, Relative Humidity, and Pore Connectivity in Mesoporous Silica Monoliths", J. Phys. Chem. C 2010, 114, pp. 8710-8716
Non-Patent Document 5: L. Huerta, et al., "Nanosized Mesoporous Silica Coatings on Ceramic Foams: New Hierarchical Rigid Monoliths", Chem. Mater. 2007, 19, pp. 1082-1088
Non-Patent Document 6: L. Huerta, et al., "Large monolithic silica-based macrocellular foarms with trimodal pore system", CHEM. COMMUN., 2003, pp. 1448-1449
Non-Patent Document 7: L. Huerta, et al., "Silica-based macrocellular foam monoliths with hierarchical trimodal pore systems", Solid State Sciences 7 (2005) pp. 405-414
Non-Patent Document 8: Y-J. Lee, et al., "Synthesis of Large Monolithic Zeolite Foams with Variable Macropore Architectures", Advanced Material, 2001, 13, No. 16, August 16, pp. 1259-1263

### DISCLOSURE OF THE INVENTION

### PROBLEMS TO BE SOLVED BY THE INVENTION

Organizing the above, it has been difficult so far to synthesize a monolithic porous body in which pores of the trimodal hierarchical porous structure are independently controlled, by a single step in the sol-gel method. Therefore, the above-described spinodal decomposition sol-gel method and hydrothermal treatment method are combined to allow independent control of pores of the two-stage hierarchical porous structure, and the method of using organic polymer fibers or the like as a template is further combined, whereby a method for producing a monolithic porous body in which pores of the trimodal hierarchical porous structure are independently controllable is considered. Specifically, it is considered as possible to synthesize a monolithic porous body having a trimodal hierarchical porous structure by a single step, by using organic polymer fibers or the like as a template, injecting sol into the void portion thereof to cause spinodal decomposition sol-gel transition, controlling a dissolution-reprecipitation reaction by hydrothermal treatment on the synthesized gel having a three-dimensional network structure, and removing the organic polymer fibers or the like used as the template by calcination or the like.

However, when organic polymer fibers or the like is used as a template in a sol-gel method, the problems shown below are caused. Specifically, in the case of a monolithic porous body by a sol-gel method, particularly, an inorganic porous body, a hydrolysis reaction and a polycondensation reaction are involved in the synthetic process, thus the gel itself contracts. By the gel contraction, the organic polymer fibers are subjected to a compressive stress from the gel in the direction that the cross-sectional area of the cross section perpendicular to the longitudinal direction of the fibers is reduced (cross-sectional direction). Generally, an object is elastically deformed by extension depending on the Poisson's ratio on the contraction in one direction component. However, due to its long and thin shape characteristic, when the fibers are externally compressed in the direction perpendicular to the longitudinal direction (cross-sectional direction) on micro sections along the longitudinal direction, the fibers can be elastically deformed if the fibers can extend in the longitudinal direction. However, when the fibers are entirely subjected to the same compressive stress, respective micro sections inhibit extension of each other among adjacent sections, and further, the extension is inhibited by compression from the gel, thus, elastic deformation becomes difficult, and contraction in response to the gel contraction becomes difficult. Therefore, since the organic polymer fibers themselves do not have contractility in the cross-sectional direction, stress is applied to the gel by the contraction of the gel itself, and the gel is not tolerant to deformation due to the contraction, thus, a split or micron order crack is generated in the skeleton part of the gel, and monolith formation becomes difficult.

The present invention is completed in view of the above-described problems, and an object of the present invention is to provide a method for producing a monolithic porous body having a trimodal hierarchical porous structure by a sol-gel method, wherein the pore size of each hierarchy is independently controllable.

### MEANS FOR SOLVING THE PROBLEMS

The present inventors analyzed the above problems, found that organic polymer fibers having a structure contractible in the direction that the cross-sectional area of the cross section perpendicular to the longitudinal direction is reduced (cross-sectional direction) while the extension in the longitudinal direction is restricted is used as a template, whereby the contraction of the gel itself can be absorbed by the template, and generation of split and cracks such as fine cracks of the gel can be avoided, and confirmed its efficacy based on the specific experiment.

Specifically, a method for producing a monolithic porous body having a trimodal hierarchical porous structure by a sol-gel method according to the present invention for achieving the above object comprises a sol preparation step of preparing a precursor sol, a gelation step of inducing a sol-gel transition and a phase separation in parallel on the precursor sol in a gelation container housing a template obtained by configuring organic polymer fibers into an aggregation having a three-dimensional spread, to form a gel made of a co-continuous structure of a hydrogel phase and a solvent phase, in the space around the organic polymer fibers, and a removal step of removing the solvent phase and the organic polymer fibers individually or simultaneously from the gel, wherein, as a structure in which the cross section perpendicular to the longitudinal direction is contractible while the extension in the longitudinal direction is restricted, the organic polymer fibers have voids inside the fibers, the voids being able to absorb compressive stress externally applied in the direction that the cross section contracts, and template holes are formed of voids remaining after the organic polymer fibers are removed, through-pores are formed of voids remaining after the solvent phase is removed, and smallpores are formed in a skeleton of the hydrogel phase.

Further, in the production method with the above characteristics, it is preferred that each of the organic polymer fibers be a hollow fiber having voids inside the fiber, that can absorb compressive stress externally applied in the direction that the cross section contracts. Furthermore, it is preferred that a plurality of the organic polymer fibers be aligned in the longitudinal direction and bundled together to configure the template. Moreover, it is preferred that the porosity of the organic polymer fibers be larger than the volume contraction rate of the gel until the organic polymer fibers are removed, or be not less than 36%.

Further, in the production method with the above characteristics, it is preferred that the diameter of the template holes be larger than the diameter of the through-pores, particularly, be not less than 10 µm.

Further, in the production method with the above characteristics, it is preferred that the main component of the monolithic porous body be a silica gel or silica glass.

Further, in the production method with the above characteristics, it is preferred that a coexisting material having a function that induces a sol-gel transition and a phase separation in parallel be added to the precursor sol.

### EFFECTS OF THE INVENTION

According to the production method with the above characteristics, a monolithic porous body having a trimodal hierarchical porous structure can be synthesized by inducing a sol-gel transition and a phase separation in parallel using organic polymer fibers as a template in the gelation step, and further, gel contraction associated with a hydrolysis reaction and a polycondensation reaction in the gelation step can be absorbed by the contraction of the organic polymer fibers in the cross-sectional direction. Therefore, the application of stress to the gel can be avoided by the contraction of the gel itself, and generation of split or cracks such as micron order cracks in the skeleton part of the gel derived from the stress can be suppressed.

Particularly, when the organic polymer fibers have voids inside the fibers, that can absorb compressive stress externally applied in the direction that the cross section of hollow fibers or the like contracts, the compressive stress can be absorbed by contraction of the voids. Particularly, when the voids continuously penetrate through the inside of the fibers, like hollow fibers, high contractility can be obtained since a large porosity can be realized. In addition, the porosity is larger than the volume contraction rate of the gel until the organic polymer fibers are removed, whereby even if the extension in the longitudinal direction of the organic polymer fibers is restricted, the gel contraction can be certainly absorbed.

Here, when the organic polymer fibers are aligned in the longitudinal direction and bundled together to configure the template, the orientation of the fibers is aligned, and the contraction in the longitudinal direction is hardly generated, thus gel contraction is also unlikely to be generated in the longitudinal direction, and the gel contracts entirely in the cross-sectional direction perpendicular to the longitudinal direction. At that time, the final volume contraction rate of the gel varies depending on the composition of the skeleton or the like, but when the skeleton of the gel is a silica gel, and the final volume contraction rate is about 32% as described below, in the case of a porosity of 36% or more, generation of split and cracks due to gel contraction can be certainly prevented even if the template is removed after the complete contraction of the gel.

### BRIEF DESCRIPTION OF THE DRAWINGS

Fig. 1 is a comparison table that comparatively lists production conditions, constitution of template, each pore size and gel size of 11 types of Examples based on the method for producing a monolithic porous body according to the present invention.
Fig. 2 is a SEM photograph showing a cross section of the template holes of one example (Example 1) of the monolithic porous body synthesized using the method for producing a monolithic porous body according to the present invention.
Fig. 3 is a SEM photograph showing through-pores of Example 1 shown in Fig. 2.
Fig. 4 is a SEM photograph showing a wall surface along the longitudinal direction of the template holes of Example 1 shown in Fig. 2.
Fig. 5 is differential smallpore size distribution curves analyzed by BJH method according to the nitrogen adsorption measurement of three monolithic porous bodies of Examples 1 to 3 synthesized using the method for producing a monolithic porous body according to the present invention.
Fig. 6 is a comparison table that comparatively lists material of fiber, fiber diameter and the way of bringing fibers together, of each comparative example used in Comparative Examples 1 to 6.
Fig. 7 is a SEM photograph showing template holes of Comparative Example 1.
Fig. 8 is a SEM photograph showing a wall surface of the template hole of Comparative Example 1.
Fig. 9 is a SEM photograph showing an enlarged cross section of the template hole of Comparative Example 2.
Fig. 10 is a SEM photograph showing a cross section along the longitudinal direction of the template holes of Comparative Example 2.
Fig. 11 is a SEM photograph showing an enlarged cross section of the template hole of Comparative Example 4.
Fig. 12 is a SEM photograph showing a cross section along the longitudinal direction of the template holes of Comparative Example 4.
Fig. 13 is a SEM photograph showing an enlarged cross section of the template hole of Comparative Example 5.
Fig. 14 is a SEM photograph showing a cross section along the longitudinal direction of the template holes of Comparative Example 5.
Fig. 15 is a SEM photograph showing a cross section of a silica gel of Comparative Example 6.
Fig. 16 is a SEM photograph showing an enlarged cross section of the template hole of Comparative Example 6.
Fig. 17 is a SEM photograph showing a cross section along the longitudinal direction of the template holes of Comparative Example 6.

### BEST MODES FOR CARRYING OUT THE INVENTION

Embodiments of the method for producing a monolithic porous body having a trimodal hierarchical porous structure according to the present invention (hereinafter appropriately called "the method of the present invention") will be described with reference to the drawings. In the following embodiments, the method of the present invention when a monolithic porous body made of a silica gel or silica glass having a three-dimensional network structure is synthesized by a spinodal decomposition sol-gel method will be described. Here, each pore having a trimodal hierarchical porous structure is referred to as smallpore, through-pore, and template hole, in ascending order of pore size.

The method of the present invention comprises a sol preparation step, a gelation step, a post-gelation step, and first and second removal steps as described bellow. Hereinbelow, the detail of each step will be described.

In the sol preparation step, a silica precursor to be a raw material of silica gel or silica glass and a coexisting material having a function that induces a sol-gel transition and a phase separation in parallel are added to an acid or alkaline aqueous solution, and for example, the mixture is stirred under low temperature of 5°C or lower where sol-gel transition is unlikely to proceed in order to cause a hydrolysis reaction, so that a homogeneous precursor sol is prepared.

As the main component of the silica precursor, water glass (sodium silicate aqueous solution), or an inorganic or organic silane compound can be used. An example of the inorganic silane compound includes tetraalkoxysilanes such as tetramethoxysilane, tetraethoxysilane, tetraisopropoxysilane, tetra-n-buthoxysilane, and tetra-t-buthoxysilane. In addition, an example of the organic silane compound includes trialkoxysilanes such as trimethoxysilane, triethoxysilane, triisopropoxysilane, and triphenoxysilane, dialkoxysilanes such as methyldiethoxysilane, methyldimethoxysilane, ethyldiethoxysilane, and ethyldimethoxysilane, monoalkoxysilanes such as dimethylethoxysilane and dimethylmethoxysilane, and the like, having a substituent such as methyl, ethyl, propyl, butyl, hexyl, octyl, decyl, hexadecyl, octadecyl, dodecyl, phenyl, vinyl, hydroxyl, ether, epoxy, aldehyde, carboxyl, ester, thionyl, thio, and amino. In addition, alkoxysilicates containing a crosslinking reaction rate controlling group substitute such as monoalkyl, dialkyl, and phenyltriethoxy, oligomers such as disilane that is a dimer thereof and trisilane that is a trimer thereof, and the like are also conceivable as the silica precursor. As the hydrolyzable silane described above, various compounds are commercially available and are easily and inexpensively available, and it is also easy to control a sol-gel reaction forming a three-dimensional cross-linked body comprising silicon-oxygen bonds.

The acid or alkaline aqueous solution is an aqueous solution obtained by dissolving an acid or base that functions as a catalyst accelerating a hydrolysis reaction of the silica precursor in water that is a solvent. As specific examples of the acid, acetic acid, hydrochloric acid, sulfuric acid, nitric acid, formic acid, oxalic acid, citric acid and the like are conceivable, and as specific examples of the base include sodium hydroxide, potassium hydroxide, ammonia water, sodium carbonate, sodium bicarbonate, amines such as trimethylammonium, ammonium hydroxides such as tert-butyl ammonium hydroxide, alkali metal alkoxides such as sodium methoxide and the like are conceivable. In addition, as specific examples of the coexisting material, block copolymers such as polyethylene oxide, polypropylene oxide, polyacrylic acid, and polyethylene oxide-polypropylene oxide block copolymer, cationic surfactants such as cetyl trimethyl ammonium chloride, anionic surfactants such as sodium dodecyl sulfate, nonionic surfactants such as polyoxyethylene alkyl ether and the like are conceivable. Here, water is used as a solvent, but alcohols such as methanol and ethanol may be used.

In the gelation step, the precursor sol prepared in the sol preparation step is injected into a gelation container housing a template obtained by forming organic polymer fibers into an aggregation having a three-dimensional spread, and allow gelation, for example, under a temperature of 40°C or so where a sol-gel transition is likely to proceed. Herein, since the coexisting material having a function that induces a sol-gel transition and a phase separation in parallel is added to the precursor sol, spinodal decomposition is induced, and a co-continuous structure of a silica hydrogel (wet gel) phase and a solvent phase having a three-dimensional network structure is gradually formed so as to fill in the space around the organic polymer fibers.

The organic polymer fibers used in the present embodiment has a structure in which the cross section perpendicular to the longitudinal direction is contractible while the extension in the longitudinal direction is restricted. Specifically, a hollow fiber or expanded fiber having a void inside the fiber, the void being able to absorb compressive stress externally applied in the direction that the cross section contracts, is used. However, it is necessary that the void exists only inside the fiber, and is not exposed to the fiber surface contacted with the precursor sol. When the void inside the fiber is exposed to the fiber surface, the precursor sol penetrates into the void inside the fiber, and the organic polymer does not function as a template.

Examples of the material of the organic polymer fibers include organic polymers such as polyester, polyacrylic, polyethylene, polypropylene, polystyrene, polyether sulfonic acid, and polyacrylonitrile. Furthermore, as for how the organic polymer fibers three-dimensionally spread, specifically, how to house the organic polymer fibers in a gelation container, various methods such as a housing method by aligning in one direction and bundling together a number of organic polymer fibers, a housing method by spirally arranging a plurality of organic polymer fibers, a method of randomly entangling a plurality of organic polymer fibers, and a method of housing a plurality of organic polymer fibers knitted into a net, are considered.

Incidentally, gel contraction associated with a hydrolysis reaction and a polycondensation reaction is caused in the gelation step. The organic polymer fibers are compressed from the gel side by contraction of the gel that circumferentially exits. At this time, the void inside the fiber contracts, whereby the cross section perpendicular to the longitudinal direction contracts while the material of fiber does not extend in the longitudinal direction. Specifically, the cross sectional area of the cross section containing the void is reduced. When the void does not exist inside the fiber, the fiber material itself is a solid and has a compression rate smaller than that of liquid and gas, thus it needs to extend in the longitudinal direction to some extent in order that the cross section of the fiber contracts. However, since the organic polymer fibers are circumferentially restrained by the gel contraction, extension in the longitudinal direction is inhibited, and consequently contraction of the fiber cross section is suppressed. Therefore, free contraction in the gel adjacent to the interface with the organic polymer fibers is inhibited and, stress is concentrated on the portion, and consequently a split, fine crack or the like is caused. However, in the present embodiment, the void exists inside the organic polymer fiber, whereby the cross section of the organic polymer fibers can contract in response to the gel contraction by void contraction even while the extension in the longitudinal direction is restricted. Therefore, the stress concentration described above does not occur or is much alleviated to avoid generation of a split, fine crack or the like.

Here, the porosity of the organic polymer fiber (the ratio of the void volume to the fiber volume including voids before contraction) is examined. When the contraction of the fiber material itself is ignored, the volume contraction rate of the organic polymer fiber (volume reduced by contraction/volume before contraction) does not exceed the porosity even in the state that the fiber contracts the most. When the volume contraction rate of the gel is equivalent to the porosity of the organic polymer fiber, assuming that the voids inside the fiber are an airtight enclosed space, it is impossible for the organic polymer fiber to contract until the volume of the voids is completely zero due to pressure increase of the gas in the voids. Therefore, the organic polymer fibers cannot contract as equivalent as the contraction of the gel. However, since the gel contraction gradually progresses over time until the organic polymer fibers are removed in the gelation step and the following removal step, it is considered that the above-described stress concentration can be avoided or alleviated if the excess that cannot contract in the vicinity of the interface of the organic polymer fibers can be absorbed into the entire gel by elasticity of the gel itself. Here, it is clear from the above description that, it is preferable that the porosity of the organic polymer fiber be larger than the volume contraction rate of the gel until the organic polymer fibers is removed since the extent of alleviation or avoidance of the above-described stress concentration gets larger. This point will be verified by examples set forth below.

Incidentally, in the organic polymer fibers, the extension along the longitudinal direction is inhibited as described above, and it is considered that the contraction along the longitudinal direction is also inhibited. Specifically, the fiber cross section contracts, whereby the fiber material itself attempts to extend inside the voids and in the longitudinal direction, thus the contraction along the longitudinal direction is also inhibited. As a result, it is considered that the gel contraction along the longitudinal direction is inhibited around the micro sections along the longitudinal direction of the organic polymer fibers, and the gel contraction is entirely caused only in the direction that the cross section of the organic polymer fibers in the micro sections contracts. Therefore, when a number of the organic polymer fibers is aligned in the longitudinal direction and bundled together to configure the template, the gel contraction along the longitudinal direction is hardly caused. This point will be verified by examples set forth below.

Furthermore, even after silica hydrogel is formed, a polycondensation reaction of the wet gel slowly proceeds, and the gel contraction is caused, thus, in the post-gelation step, temperature control to the polycondensation reaction is continued until the polycondensation reaction almost finishes and the gel contraction almost finishes. In the post-gelation step, the co-continuous structure of a silica hydrogel phase and a solvent phase formed in the space around the organic polymer fibers in the gelation step is immersed in a basic aqueous solution such as ammonia water, heat-treated in a pressurized container, whereby a hydrolysis reaction, a polycondensation reaction and a dissolution-reprecipitation reaction of the silica hydrogel phase are further proceeded, and the skeletal structure of the silica hydrogel phase can be more consolidated. By the progression of the dissolution-reprecipitation reaction of silica fine particles forming the skeleton of the silica hydrogel phase, the smallpore size formed in the skeleton is expanded. Furthermore, the dissolution-reprecipitation reaction is repeated by hydrothermal treatment, whereby control of further expanding the smallpore size is possible. Incidentally, the control of the smallpore size can be also realized by adding urea to the precursor sol in addition to the catalyst and coexisting material. Urea is hydrolyzed under a temperature of 60°C or more to produce ammonia, and since the pore size of the smallpores formed in the skeleton of the wet gel synthesized in the gelation step is expanded by the ammonia, the control of the smallpore size is possible by the addition of urea.

Subsequently, in the first removal step, washing and drying or only drying of the wet gel is carried out to remove the solvent phase containing additives, unreacted substances, and the like. The spaces remaining after the removal of the solvent phase become through-pores. Control of the through-pore size is possible by the composition and amount of the coexisting material added to the precursor sol in the sol preparation step. By washing, the surface tension during drying that is caused by additives, unreacted substances and the like remained in the solvent phase is resolved, and occurrence of distortion and split during drying can be suppressed. As a wash solution, a liquid such as an organic solvent and an aqueous solution is desirable. In addition, a liquid in which an organic compound or inorganic compound is dissolved can be also used. Furthermore, when a solution having a pH different from the isoelectric point of the gel, such as an acid or alkali is used as the wash solution, the additives and the like remained in the gel can be easily removed. Specifically, various acids including hydrochloric acid, sulfuric acid, nitric acid, hydrofluoric acid, acetic acid, formic acid, carbonic acid, citric acid, and phosphoric acid, and various bases including sodium hydroxide, potassium hydroxide, ammonia, water-soluble amine, sodium carbonate, and sodium bicarbonate can be used. For drying of the wet gel, air-drying may be adopted, and further, in order to resolve distortion and split occurred during drying the wet gel, it is also preferable to adopt drying performed after the solvent in the wet gel is replaced by a low surface tension solvent having lower surface tension than water such as isopropanol, acetone, hexane, or hydrofluorocarbon, drying by freeze sublimation, and supercritical drying performed under no surface tension after the solvent in the wet gel is exchanged for carbon dioxide in supercritical state, and the like.

Subsequently, in the second removal step, the organic polymer fibers are removed from the gel after drying. The spaces remaining after the removal of the organic polymer fibers become template holes. Control of the pore size of the template holes is possible by the diameter and porosity (or the contraction rate of the fiber cross section) of the organic polymer fibers.

When the second removal step is performed after the first removal step, a method of removing the organic polymer fibers simply by combustion and calcination can be used. Since it is possible to sinter the obtained dried gel into a silica glass by calcination, a method of removing the organic polymer fibers by calcination is easy. Incidentally, when the calcination temperature is lower than the glass-transition temperature of the silica (about 1000°C), the dried gel does not sinter into a silica glass.

In addition, the second removal step can be performed simultaneously with the first removal step or before the first removal step. For example, when the organic polymer fibers are removed before the first removal step and after the gelation step or the post-gelation step, a method of removing the organic polymer fibers by hydrolyzing the organic polymer fibers with an acid or alkali to dissolve it in the solvent can be used. Furthermore, it is also possible to simultaneously perform the first and second removal steps by directly calcining the wet gel after the post-gelation step.

Through the sol preparation step, the gelation step, the post-gelation step, and the first and second removal steps described above, a monolithic porous body of a dried silica gel or silica glass of a three-dimensional network structure having a trimodal hierarchical porous structure is obtained.

Next, specific examples of the method of the present invention will be described compared with comparative examples. Hereinbelow, each production condition of 11 types of Examples 1 to 11 and 7 types of Comparative Examples 1 to 7 will be described.

### <Example 1>

In 10 mL (milliliter, cm³) of a 0.01 M (volume molar concentration) acetic acid aqueous solution were dissolved 0.8 g of polyethylene glycol (molecular weight of 100000) that is a coexisting material and 0.2 g of urea, and the solution was stirred to form a homogeneous solution. Thereto was added 5 mL of tetramethoxysilane (TMOS, silica precursor) in an ice bath, and the mixture was stirred for 30 minutes to obtain a homogeneous precursor sol (sol preparation step). Two hundred hollow fibers having a length of 120 mm (AEROCAPSULE manufactured by Teijin Fibers Limited, material: polyester, outer diameter: about 20 to 30 µm, porosity: about 70%) were bundled together to configure a template in an aggregation having a three-dimensional spread, and the template was housed in a vinyl chloride cylindrical container having an inner diameter of 4 mm and a length of 150 mm while the longitudinal direction of the fibers was aligned with the longitudinal direction of the container. Then, the precursor sol was injected into the container by a length of the hollow fiber, and left in a hot-water bath at 40°C for 3 hours to allow gelation (gelation step). Thereafter, the resulting wet gel was aged for 12 hours in an oven at 80°C (post-gelation step), and the aged gel was taken out from the oven and washed with water and ethanol, then air-dried (first removal step), and the resulting dried gel was calcined at 650°C for 5 hours (second removal step), to obtain a monolithic porous body of a silica gel having a trimodal hierarchical porous structure (smallpore size: 2 to 12 nm, through-pore size: 0.5 to 1 µm, template hole size: 10 to 20 µm).

### <Example 2>

The sol preparation step and the gelation step as in Example 1 were performed, and the resulting wet gel was aged for 12 hours in an oven at 80°C, and the aged gel was taken out from the oven, immersed in 0.1 M ammonia water, and subjected to a hydrothermal treatment in an autoclave at 120°C for 12 hours (post-gelation step), and the first removal step and the second removal step as in Example 1 were performed, to obtain a monolithic porous body of a silica gel having a trimodal hierarchical porous structure (smallpore size: 10 to 100 nm, through-pore size: 0.5 to 1 µm, template hole size: 10 to 20 µm). In Example 2, the same treatments as in Example 1 were performed, except for adding the hydrothermal treatment in the post-gelation step for Example 1.

### <Example 3>

In 10 mL of a 0.01 M acetic acid aqueous solution were dissolved 0.65 g of polyethylene glycol (molecular weight of 100000) and 0.2 g of urea, that were coexisting materials, and the solution was stirred to form a homogeneous solution. Thereto was added 5 mL of tetramethoxysilane in an ice bath, and the mixture was stirred for 30 minutes to obtain a homogeneous precursor sol (sol preparation step). The gelation step and the post-gelation step as in Example 1 were performed, and the aged gel was taken out from the oven, immersed in 0.1 M ammonia water, subjected to a hydrothermal treatment in an autoclave at 120°C for 12 hours, and washed with water and ethanol, then air-dried (first removal step), and the second removal step as in Example 1 was performed, to obtain a monolithic porous body of a silica gel having a trimodal hierarchical porous structure (smallpore size: 6 to 90 nm, through-pore size: 2 to 7 µm, template hole size: 10 to 20 µm). In Example 3, the same treatments as in Example 1 were performed, except for reducing the additive amount of polyethylene glycol from 0.8 g to 0.65 g, and adding the hydrothermal treatment for Example 1. Specifically, in Example 3, the same treatments as in Example 2 were performed, except for reducing the additive amount of polyethylene glycol from 0.8 g to 0.65 g for Example 2.

### <Example 4>

In a mixture of 5 mL of a 0.02 M acetic acid aqueous solution and 5 g of ice were dissolved 0.8 g of polyethylene glycol (molecular weight of 100000) and 0.2 g of urea, that were coexisting materials, and the solution was stirred to form a homogeneous solution. Thereto was added 5 mL of tetramethoxysilane in an ice bath, and the mixture was stirred for 30 minutes to obtain a homogeneous precursor sol (sol preparation step). The gelation step, the post-gelation step, the first removal step and the second removal step as in Example 1 were performed, to obtain a monolithic porous body of a silica gel having a trimodal hierarchical porous structure (smallpore size: 2 to 12 nm, through-pore size: 0.5 to 1 µm, template hole size: 10 to 20 µm). In Example 4, the same treatments as in Example 1 were performed, except for using the mixture of 5 mL of a 0.02 M acetic acid aqueous solution and 5 g of ice in place of 10 mL of a 0.01 M acetic acid aqueous solution for Example 1. Here, since 5 mL of a 0.02 M acetic acid aqueous solution and 5 g of ice becomes 10 mL of a 0.01 M acetic acid aqueous solution after the ice is melted, there is no substantial difference as for the composition of the precursor sol. However, by using an ice, an effect of inhibiting the progression of a sol gel transition can be expected by suppressing heat generation of the hydrolysis reaction during the sol preparation. In the present embodiment, since the volume of the sol is small like 16 mL or so, uniform temperature control is possible by an ice bath. However, when the volume of the sol is increased, more precise temperature control is possible by suppressing heat generation of the hydrolysis reaction by the materials constituting the sol, and contributes to synthesis of a homogeneous gel.

### <Examples 5 to 9>

The sol preparation step as in Example 1 was performed, and five types of twenty hollow fibers having a length of 120 mm different from the hollow fibers used in Example 1 were heated at 120°C and each bundled together to configure five types of templates, and the templates were each housed in a vinyl chloride cylindrical container having an inner diameter of 4 mm and a length of 150 mm while the longitudinal direction of the fibers was aligned with the longitudinal direction of the container. Then, the precursor sol was injected into each of the container by the length of the hollow fiber, and left in a hot-water bath at 40°C for 3 hours to allow gelation (gelation step). Thereafter, the post-gelation step, the first removal step and the second removal step as in Example 1 were performed, to obtain five types of monolithic porous bodies of silica gels having a trimodal hierarchical porous structure (smallpore size: 2 to 12 nm, through-pore size: 0.5 to 1 µm, template hole size: set forth below).

In Example 5, a hollow fiber used in a membrane plasma separator Plasmacure PE manufactured by Kuraray Medical Inc. (material: polyethylene, outer diameter: about 250 µm, porosity: about 60%) was used to obtain 200 to 300 µm as the template hole size. In Example 6, a hollow fiber used in a membrane plasma separator Plasmaflo OP manufactured by Asahi Kasei Kuraray Medical Co., Ltd. (material: polyethylene, outer diameter: about 250 µm, porosity: about 60%) was used to obtain 200 to 300 µm as the template hole size. In Example 7, a hollow fiber used in a membrane plasma separator Plasmaflo CW manufactured by Asahi Kasei Kuraray Medical Co., Ltd. (material: ethylene-vinyl alcohol copolymer, outer diameter: about 150 µm, porosity: about 47%) was used to obtain 100 to 200 µm as the template hole size. In Example 8, a hollow fiber used in a hollow fiber dialyzer BP-H manufactured by JMS CO., LTD. (material: polyethersulfone, outer diameter: about 150 µm, porosity: about 55%) was used to obtain 100 to 200 µm as the template hole size. In Example 9, a hollow fiber used in a plasma separator LF manufactured by Informed in Switzerland (material: polyethersulfone, outer diameter: about 300 µm, porosity: about 36%) was used to obtain 250 to 350 µm as the template hole size. In Examples 5 to 9, the same treatment as in Example 1 was performed, except that the hollow fiber constituting the template is different from that in Example 1. Since the hollow fibers used in Examples 5 to 9 have smallpores in the membrane wall, the hollow fibers are subjected to a treatment of blocking the smallpores by heating at 120°C, and thus the outer diameter of the hollow fiber gets smaller than that before heating, and variation is caused. The purpose of blocking the smallpores of the hollow fiber is for preventing sol from penetrating into the hollow fiber through the smallpores, and inhibiting a function as the hollow fiber.

### <Example 10>

The sol preparation step as in Example 1 was performed, and two hundred hollow fibers having a length of 120 mm as in Example 1 were randomly rounded, and housed in a vinyl chloride cylindrical container having an inner diameter of 4 mm and a length of 150 mm, then the precursor sol was injected into each of the container, and left in a hot-water bath at 40°C for 3 hours to allow gelation (gelation step). Thereafter, the post-gelation step, the first removal step and the second removal step as in Example 1 were performed, to obtain a monolithic porous body of a silica gel having a trimodal hierarchical porous structure (smallpore size: 2 to 12 nm, through-pore size: 0.5 to 1 µm, template hole size: 10 to 20 µm). In Example 10, the same treatments as in Example 1 were performed, except that how to configure the hollow fibers into an aggregation having a three-dimensional spread (the way of bringing the hollow fibers together) is different from that in Example 1.

### <Example 11>

The sol preparation step as in Example 1 was performed, and five expanded fibers having a length of 100 mm (material: expanded polystyrene, outer diameter: about 500 µm, porosity: about 97%) were bundled together to configure a template in an aggregation having a three-dimensional spread, and housed in a vinyl chloride cylindrical container having an inner diameter of 4 mm and a length of 150 mm while the longitudinal direction of the fibers was aligned with the longitudinal direction of the container. Then, the precursor sol was injected into each of the container by a length of the expanded fiber, and left in a hot-water bath at 40°C for 3 hours to allow gelation (gelation step). Thereafter, the post-gelation step, the first removal step and the second removal step as in Example 1 were performed, to obtain a monolithic porous body of a silica gel having a trimodal hierarchical porous structure (smallpore size: 2 to 12 nm, through-pore size: 0.5 to 1 µm, template hole size: 300 to 500 µm).

### <Comparative Examples 1 to 6>

The sol preparation step as in Example 1 was performed, and six types of fibers having no void inside (hereinafter, called as fibers of the comparative examples) different from the fibers in Examples 1 to 10 were used to configure six types of templates, and the templates were each housed in a vinyl chloride cylindrical container having an inner diameter of 4 mm and a length of 150 mm while the longitudinal direction of the fibers of the comparative examples was aligned with the longitudinal direction of the container. Then, the precursor sol was injected into each of the container by the length of the fibers, and left in a hot-water bath at 40°C for 3 hours to allow gelation (gelation step). Thereafter, the post-gelation step, the first removal step and the second removal step as in Example 1 were performed. In Comparative Examples 1 to 6, the same treatments as in Example 1 were performed, except that the fibers of the comparative examples constituting the template are different from the hollow fibers in Example 1. Six types of the fibers of the comparative examples are a commercially available fiber, and all the cross sections perpendicular to the longitudinal direction are difficult to shrink, specifically, the fibers are poor in contractility in the direction parallel to the cross section (cross-sectional direction).

In Comparative Example 1, a urethane sponge S-21K manufactured by Scotch-Brite (material: polyurethane, fiber diameter: about 100 µm) was formed into a size of ϕ4 mm × 120 mm, and the skeleton of the expanded polyurethane was used as the fibers of the comparative example. In Comparative Example 2, 55 g of polyester cotton manufactured by Teijin Fiber Limited (material: polyester, fiber diameter: about 20 µm) was compressed into a size of ϕ4 mm × 120 mm and used. In Comparative Example 3, five acrylic craft yarns manufactured by Hands Products Co.Ltd. having a length of 120 mm (material: polyacrylic, fiber diameter: about 10 µm) were bundled together and used. In Comparative Example 4, hundred MONOCOLOR #100 manufactured by FUJIX Ltd. having a length of 120 mm (material: nylon, fiber diameter: about 50 µm) were bundled together and used. In Comparative Example 5, hundred FINE white 04 manufactured by FUJIX Ltd. having a length of 120 mm (material: polyester, fiber diameter: about 50 µm) were bundled together and used. In Comparative Example 6, hundred TIRE No. 50 manufactured by FUJIX Ltd. having a length of 120 mm (material: silk, fiber diameter: about 50 µm) were bundled together and used.

### <Comparative Example 7>

The sol preparation step as in Example 1 was performed, and in a vinyl chloride cylindrical container having an inner diameter of 4 mm and a length of 150 mm that did not house a template, the precursor sol was injected into each of the container by a length of 120 mm, and left in a hot-water bath at 40°C for 3 hours to allow gelation (gelation step). Thereafter, the post-gelation step, the first removal step and the second removal step as in Example 1 were performed, to obtain a monolithic porous body of a silica gel having a two-stage hierarchical porous structure having no template hole. In Comparative Example 7, the same treatments as in Example 1 were performed, except that a template was not used in the gelation step.

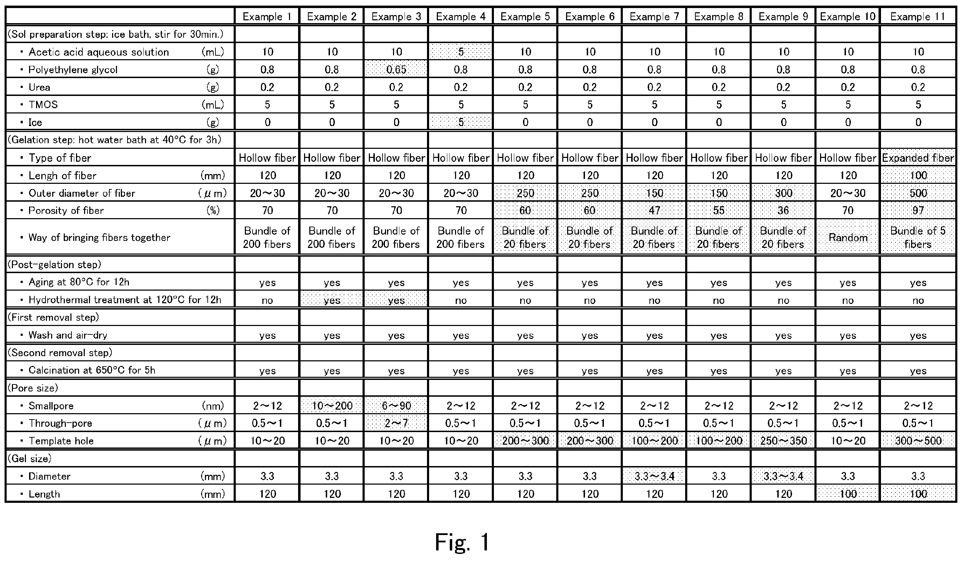

The production conditions of Examples 1 to 11 and Comparative Examples 1 to 7 were briefly described above. Hereinbelow, the results of each of examples and comparative examples will be considered. A comparison table of production conditions, constitution of template, each pore size and gel size of Examples 1 to 11 is shown in Fig. 1. In the figure, the shaded area of Examples 2 to 11 is the part different from Example 1. The pore sizes of through-pore and template hole were obtained by measuring the sizes of each pore on the scanning electron microscope (SEM) photograph. The distribution range and peak value of smallpore were measured from the differential smallpore size distribution curve analyzed by BJH method according to the nitrogen adsorption measurement.

In Examples 1 to 9, the hollow fibers are blocked by binding one end of each hollow fiber located in the bottom surface side of the gelation container, to prevent sol infiltration. However, the other end of each hollow fiber located in the opening surface side of the gelation container is each opened since the possibility of sol infiltration from the end into the hollow fibers is very low due to the surface tension of the sol. Whereby, when the hollow fibers contract, air in the voids is released externally, thus the voids inside the hollow fibers can freely contract in response to the gel contraction.

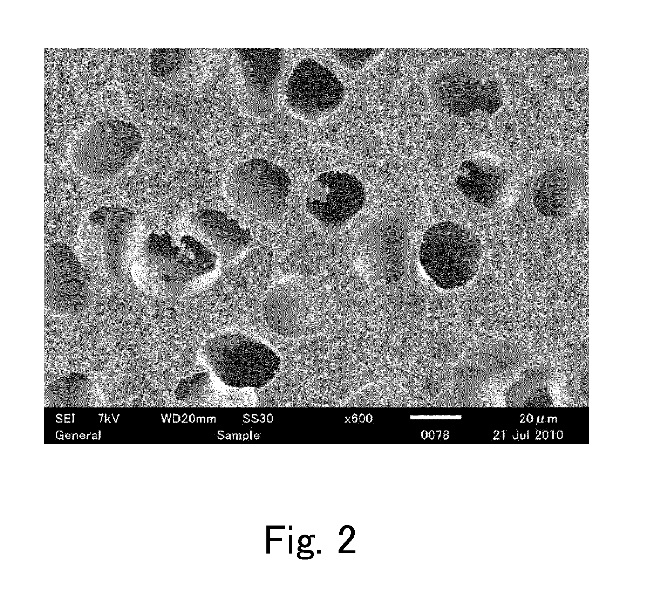

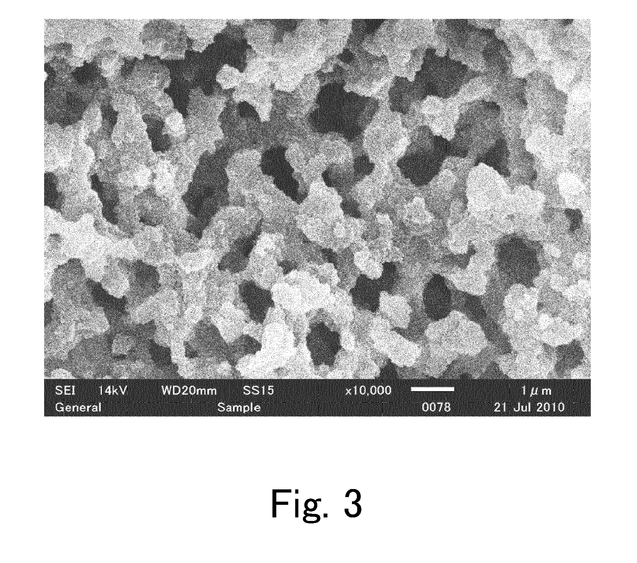

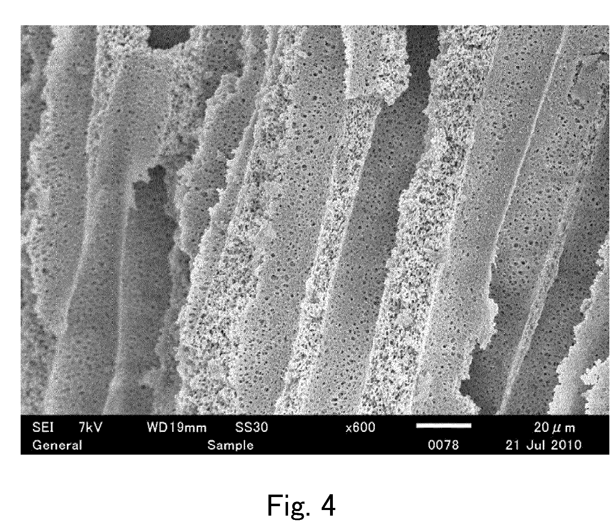

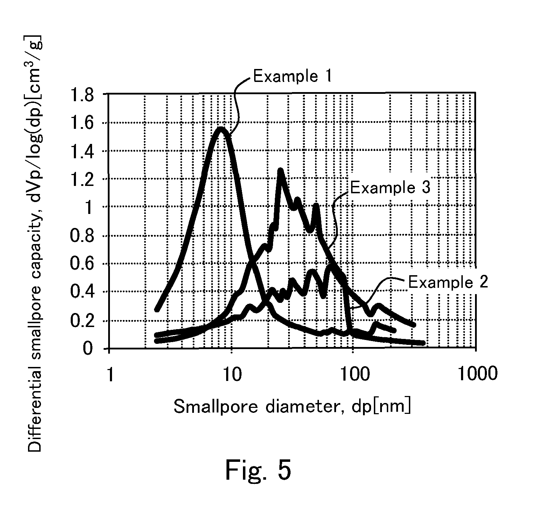

Examples 1 to 3 are examples comparatively showing that smallpore size and through-pore size can be each independently controlled. A SEM photograph showing a cross section perpendicular to the longitudinal direction of the template holes of Example 1 and a SEM photograph showing through-pores of Example 1 are respectively shown in Fig. 2 and Fig. 3. Fig. 4 is a SEM photograph showing a cross section parallel to the longitudinal direction of the template holes of Example 1 (wall surface of the template holes) in the same magnification as Fig. 2. It can be seen from Fig. 2 and Fig. 4 that the silica gel having a three-dimensional network structure having through-pores smaller than template holes is formed around the template holes. In addition, it can be seen from Fig. 3 that smallpores smaller than through-pores are formed in the skeleton of the silica gel having a three-dimensional network structure. Differential smallpore size distribution curves analyzed by BJH method according to the nitrogen adsorption measurement of Examples 1 to 3 are shown in Fig. 5. It can be seen from Fig. 5 that the smallpore size of Example 1 has a peak at 8 nm and has a distribution in the range of 2 to 12 nm, the smallpore size of Example 2 has a peak at 65 nm and has a distribution in the range of 10 to 200 nm, and the smallpore size of Example 3 has a peak at 25 nm and has a distribution in the range of 6 to 90 nm. In addition, while Examples 1 and 2 have a through-pore size of from 0.5 to 1 µm, Example 3 has an expanded range of the through-pore size of from 2 to 7 µm. The template holes are same, 10 to 20 µm, since the same hollow fibers are used. It can be seen from the comparison table of Fig. 1 and Fig. 5 that the smallpore size and the through-pore size can be each independently controlled.

Examples 1 and 4 show that the difference in the cooling method in the sol preparation step does not make a difference in each pore size. It could be confirmed from Example 4 that, as the cooling method in the sol-preparation step effective in synthesizing a large gel with a volume more than 100 mL, a method of putting a solid obtained by forcibly cooling a compound constituting the precursor sol or a reaction system (ice as one example) into the sol to suppress heat generation of the hydrolysis reaction during sol preparation can be also applied to the method of the present invention.

Examples 1, and 5 to 9 are examples comparatively showing that the pore size of the template hole is independently controllable by the difference of the outer diameter of the used hollow fibers. It can be seen from the comparison table of Fig. 1 that, the larger the outer diameter of the hollow fibers is, the larger the pore size of the template holes is. The smallpore size and the through-pore size are the same. In addition, by using commercially available hollow fibers having the outer diameter and porosity shown in the comparison table of Fig. 1, the pore size of the template holes becomes controllable within the range of 10 µm to 350 µm or so. Here, the variation in the pore size of the template holes in Examples 5 to 9 is attributed to the variation in the outer diameter dimension caused by heat treatment of the hollow fibers.

In all of Examples 1 to 10, the size of the sol before the gelation step was ϕ4 mm × 120 mm. On the other hand, the size of the gel after the post-gelation step was ϕ3.3 mm × 120 mm in Examples 1 to 6 and 8, ϕ3.3 to 3.4 mm × 120 mm in Examples 7 and 9, and ϕ3.3 mm × 100 mm in Example 10. The gel contraction in the first and second removal steps after the post-gelation step was hardly seen. Based on the above, in Examples 1 to 9 in which each fiber of the hollow fibers is aligned in the longitudinal direction and bundled together to configure the template, the gel contraction in the longitudinal direction was not observed. On the other hand, in Example 10 in which the hollow fibers were randomly rounded to configure the template, the gel contraction in the longitudinal direction was observed. In Examples 1 to 9, the linear shrinkage rate in the direction perpendicular to the longitudinal direction (cross-sectional direction) was 17.5% or 15% to 17.5%, and the linear shrinkage rate in the longitudinal direction was 0%, thus extreme anisotropy of the linear shrinkage rate was observed. In Example 10, the linear shrinkage rate in the cross-sectional direction was 17.5%, and the linear shrinkage rate in the longitudinal direction was 16.7%, thus it can be seen that the linear shrinkage rate was almost isotropic. Here, in Comparative Example 7 that is the same as Example 1 except that a template is not used in the gelation step, the linear shrinkage rate in each direction was the same as that in Example 10. Also, there is no difference in each pore size of smallpores, through-pores and template holes, between Example 1 and Example 10 that are different in how to configure the template.

In Example 11, unlike in Examples 1 to 10, expanded fibers having closed cells in the inside were used as the material of the template. Since an expanded fiber is not commercially available, a home-made material prepared by cutting an expanded polystyrene for food packaging (closed cells, porosity: about 97%) into strands of ϕ0.5 mm × 100 mm with a scalpel was used. The size of the sol before the gelation step was ϕ4 mm × 100 mm. On the other hand, the size of the gel after the post-gelation step was ϕ3.3 mm × 100 mm. As same as Examples 1 to 6, and 8, the linear shrinkage rate in the direction perpendicular to the longitudinal direction (cross-sectional direction) was 17.5%, and the linear shrinkage rate in the longitudinal direction was 0%, thus extreme anisotropy of the linear shrinkage rate was observed. In addition, as same as Examples 1 to 10, the gel contraction in the first and second removal steps after the post-gelation step was hardly seen. Therefore, it could be confirmed that, even when expanded fibers are used as the material of the template, a monolithic porous body of a silica gel having a trimodal hierarchical porous structure can be synthesized as is the case of using hollow fibers. Here, there is no difference in each pore size of smallpores and through-pores, between Example 1 and Example 11 that are different in the type of organic polymer fibers that constitute the template.

Based on the above, it can be seen that the gel contraction throughout the gelation step and the post-gelation step is entirely caused in the direction that the gel is likely to contract, and it can be seen that the fibers constituting the template are aligned in the longitudinal direction (Examples 1 to 9, and 11), whereby the contraction in the longitudinal direction is suppressed, and the volume contraction rate is reduced as compared to those of Example 10 and Comparative Example 7. In Examples 1 to 9, it is considered that a polycondensation reaction slowly proceeds throughout the gelation step and the post-gelation step, and the gel itself has some extent of elasticity, whereby a three-dimensional network skeletal structure that has the contraction only in the cross-sectional direction and is totally homogeneous as a whole is obtained.

The volume contraction rate of Examples 1, and 5 to 9 is about 32% in Examples 1, 5, 6, and 8, and about 28% to 32% in Examples 7 and 9. In view of the relationship with the porosity of the hollow fibers in Examples 1, and 5 to 9, all porosities are larger than the volume contraction rates. Therefore, it can be seen that the gel contraction is sufficiently absorbed by the contraction of the voids in the hollow fibers. In Examples 7 and 9, the porosity is smaller than that in Examples 1, 5, 6, and 8, thus, it is inferred that the gel contraction in the cross-sectional direction is slightly suppressed. In Example 9, the porosity of the follow fibers is about 36%, thus there is no big difference from a volume contraction rate of 32%, nevertheless it is seen that the gel contraction smoothly proceeded. On the other hand, in Example 10 which the gel contracted also in the longitudinal direction of the container, the volume contraction rate is 43.3% that is larger than that in Examples 1 to 9, but the porosity of the hollow fibers is 70% that is larger than the volume contraction rate, thus it can be seen that the gel concentration smoothly proceeded in all directions.

It can be seen from the results of Examples 1 to 10 that the hollow fibers certainly function with the porosity in the range of from about 36% to about 70%, even if the porosity decreases to 32% or so, since a polycondensation reaction slowly proceeds and the gel itself has some extent of elasticity, it is considered that the gel contraction is sufficiently absorbed while the volume contraction rate of the gel is suppressed to some extent. However, also in this case, it is considered preferable if the porosity is larger than the suppressed volume contraction rate of the gel. Furthermore, even the porosity of the hollow fibers increases to beyond 70%, 80% or 90% or so, and further 99% or so, there is no problem from the viewpoint of absorbing the gel contraction. Therefore, it is considered that the upper limit of the porosity of the hollow fibers is determined on the condition that the outer wall of the hollow fibers will not break by the relationship with the used material.

It could be confirmed from the result of Example 11 that, the expanded fibers having many closed cells in the inside can be also used as the organic polymer fibers constituting the template used in the gelation step, in addition to the hollow fibers. However, since the closed cells in the expanded fibers are compressed without the internal gas being released externally even when the cells contract in response to the gel contraction, it is preferable to use fibers having a larger porosity than the hollow fibers. In Example 11, the fibers having a porosity of 97%, that is larger than 70% that is the porosity of the follow fibers in Example 1 and is about three times as large as 32% that is the volume contraction rate of the gel, were used.

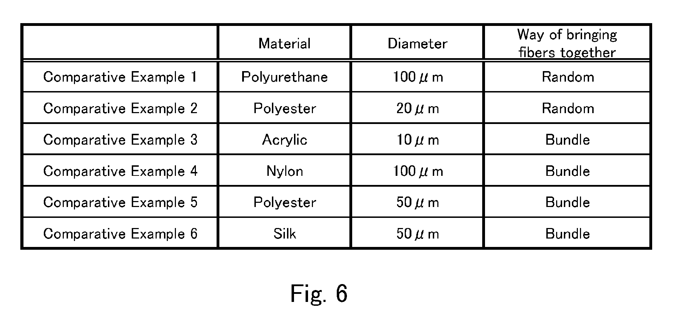

Next, the results of Comparative Examples 1 to 6 will be described. In Fig. 6, a comparison table that comparatively lists material of each of fibers of the comparative examples, fiber diameter and the way of bringing fibers together, of Comparative Examples 1 to 6 is shown. Hereinbelow, the synthesized silica gel will be described with reference to a SEM photograph for each comparative example.

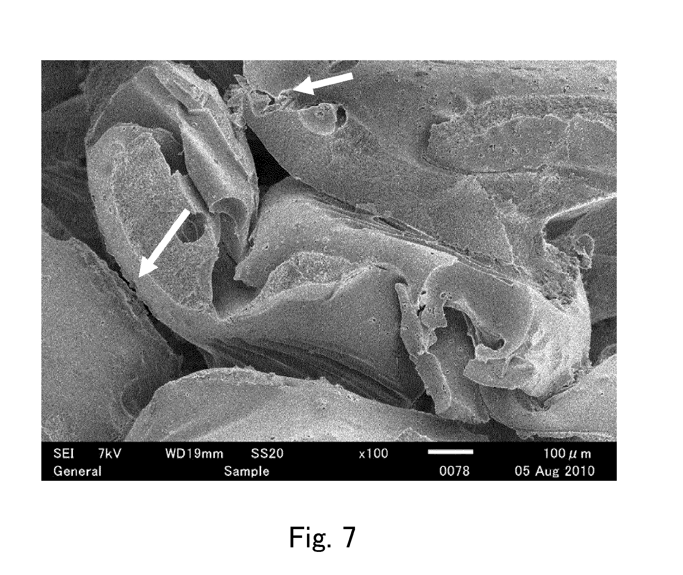

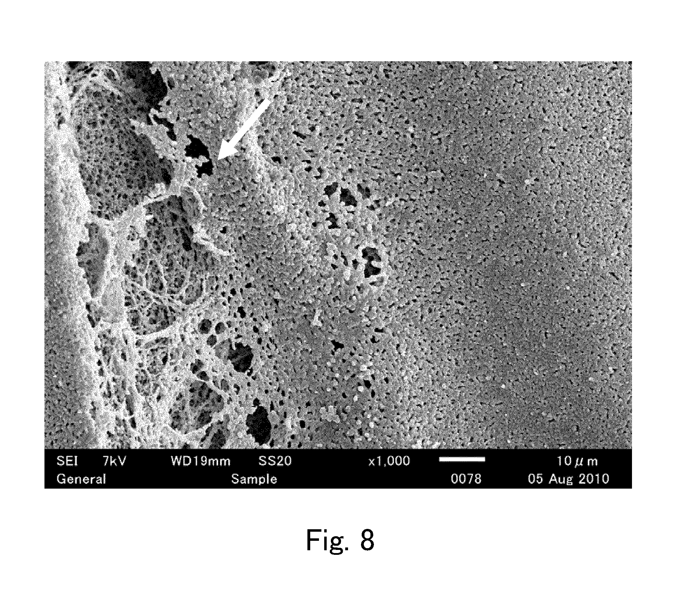

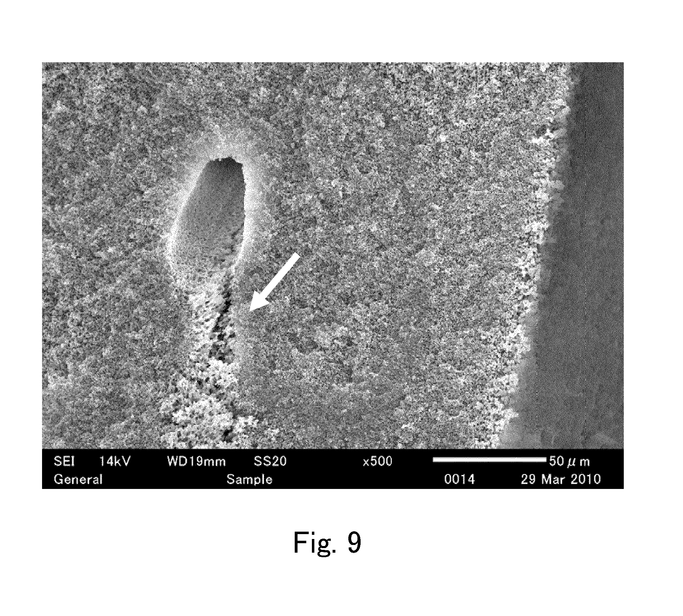

Fig. 7 and Fig. 8 are a SEM photograph of Comparative Example 1, and Fig. 8 is an enlarged photograph of a wall surface of the template hole. From Fig. 7, it is observed that template holes are formed along the fibers of the comparative example (skeletal structure of expanded polyurethane) in Comparative Example 1, and the shape of the template holes is irregular, and cracks are observed in places. In addition, in the enlarged photograph of Fig. 8, cracks are observed on the wall surface of the template hole, specifically, on the surface of the gel skeleton. The arrows in the drawing show a representative crack place (the same applies in Fig. 9 to Fig. 17 described below). It is considered that the cracks were generated since the gel could not contract around the fibers of the comparative example during gel contraction associated with a polycondensation reaction, and the gel skeleton was split up.

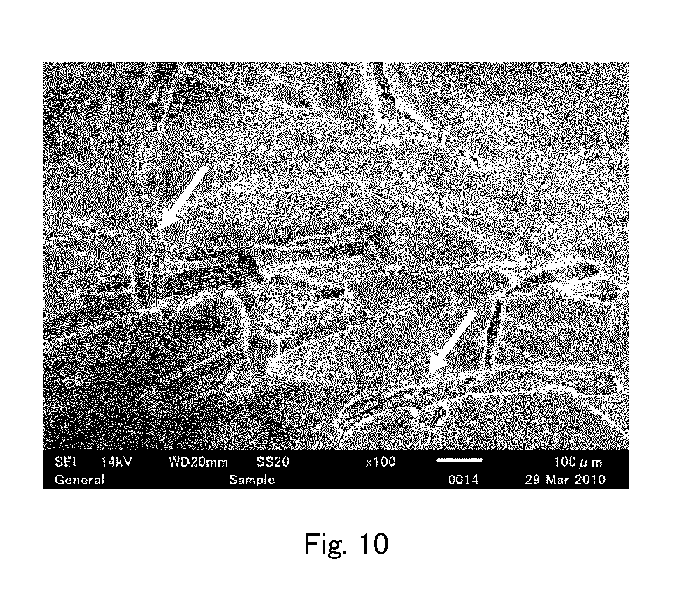

Fig. 9 and Fig. 10 are a SEM photograph of Comparative Example 2, Fig. 9 is an enlarged photograph of a cross section of the template hole, and Fig. 10 is a photograph of a cross section along the longitudinal direction of the template holes. From Fig. 9 and Fig. 10, it is observed that the template holes are formed along the fibers of the comparative example also in Comparative Example 2, and many cracks are observed on the wall surface of the template holes. As with Comparative Example 1, it is considered that the cracks were generated since the gel could not contract around the fibers of the comparative example during gel contraction associated with a polycondensation reaction, and the gel skeleton was split up.

In Comparative Example 3, the gel was crushed into fragments, and could not be synthesized as a monolithic porous body. Therefore, there is no SEM photograph of Example 3. As with Comparative Examples 1 and 2, it is considered that the gel could not contract around the fibers of the comparative example during gel contraction associated with a polycondensation reaction, and the gel skeleton was crushed.

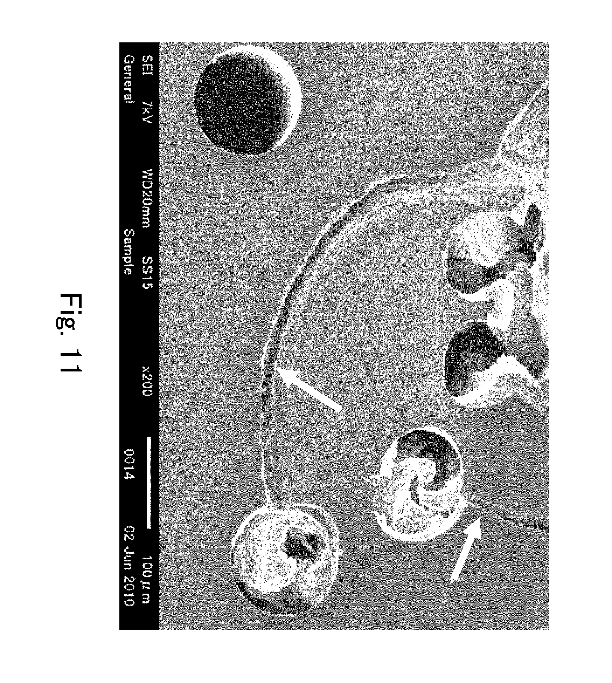

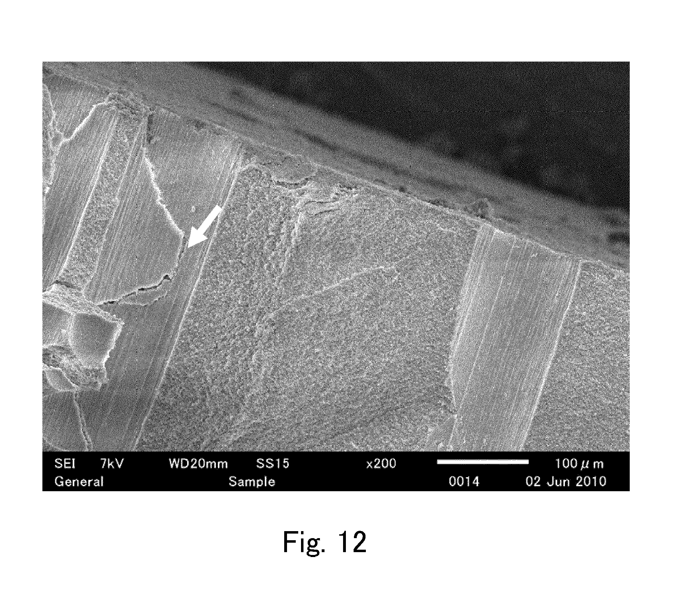

Fig. 11 and Fig. 12 are a SEM photograph of Comparative Example 4, Fig. 11 is an enlarged photograph of a cross section of the template holes, and Fig. 12 is a photograph of a cross section along the longitudinal direction of the template holes. From Fig. 11, it is observed that the template holes are formed along the fibers of the comparative example also in Comparative Example 4, and it is observed that cracks are generated as being derived from the template holes. The cracks are continuous between the template holes. It can be seen from Fig. 12 that many cracks are generated on the wall surface of the template holes. As with Comparative Examples 1 to 3, it is considered that the cracks were generated since the gel could not contract around the fibers of the comparative example during gel contraction associated with a polycondensation reaction, and the gel skeleton was split up.

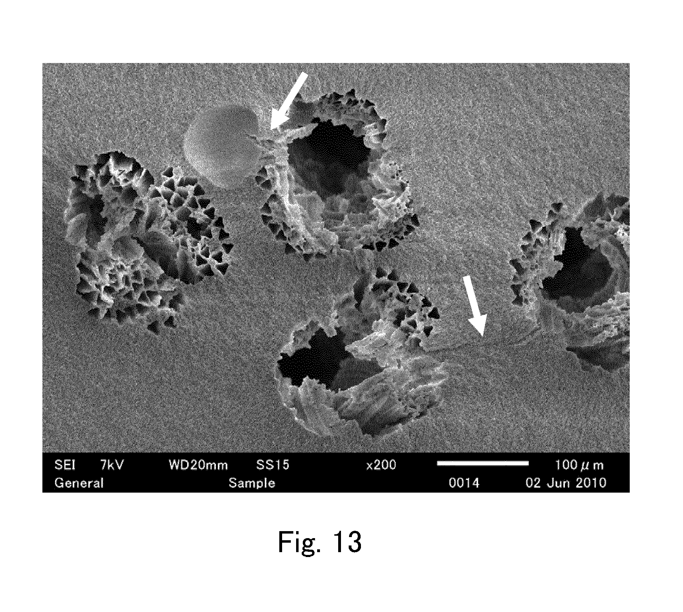

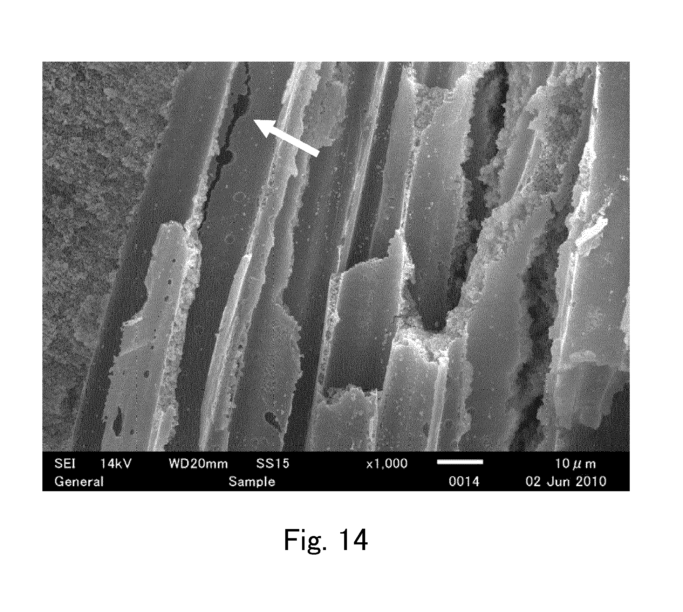

Fig. 13 and Fig. 14 are a SEM photograph of Comparative Example 5, Fig. 13 is an enlarged photograph of a cross section of the template holes, and Fig. 14 is a photograph of a cross section along the longitudinal direction of the template holes. From Fig. 13, it is observed that the template holes are formed along the fibers of the comparative example also in Comparative Example 5, and since the fibers of the comparative example in Comparative Example 5 are formed as a bundle of fibers having a triangular cross section of 10 µm or so, in Fig. 13 and Fig. 14, many triangular cavities are observed around the outer periphery of the template holes, and many cracks are observed along the cavities. In addition, it is observed that the cracks are generated as being derived from the template holes. The cracks are continuous between the template holes. As with Comparative Examples 1 to 4, it is considered that the cracks were generated since the gel could not contract around the fibers of the comparative example during gel contraction associated with a polycondensation reaction, and the gel skeleton was split up.

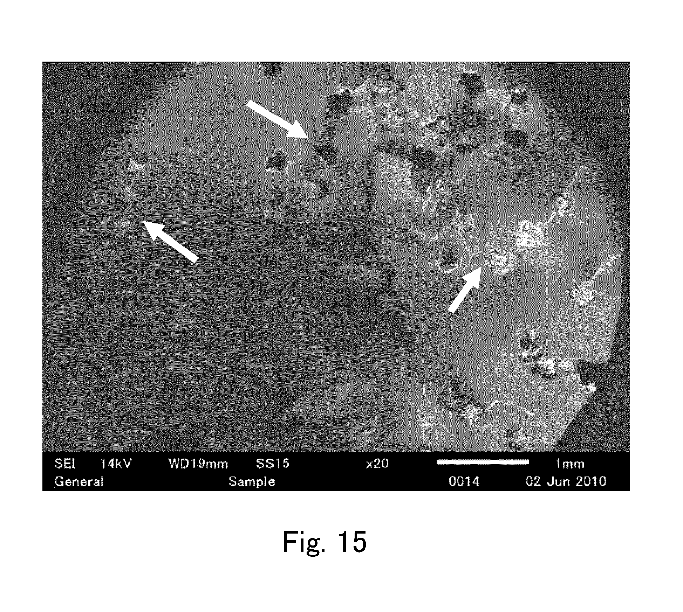

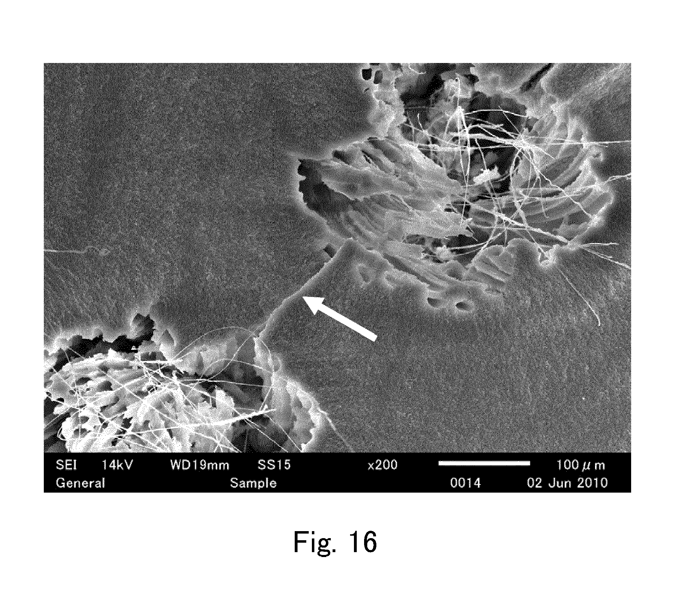

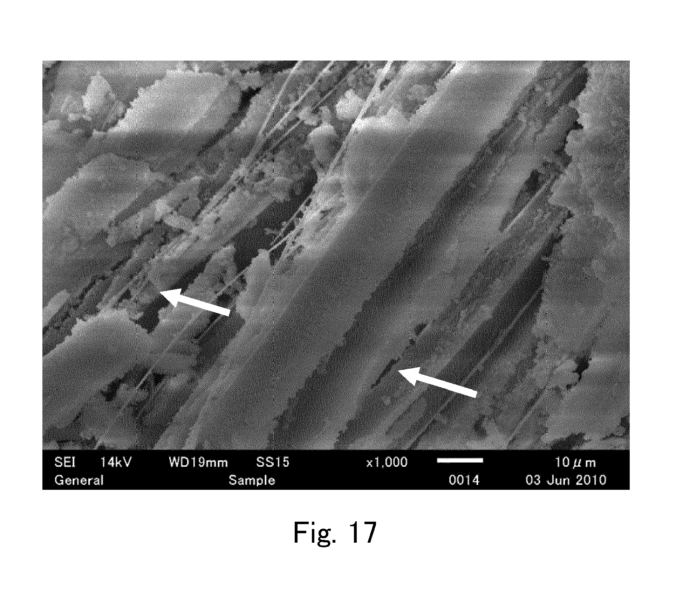

Fig. 15 to Fig. 17 are a SEM photograph of Comparative Example 6, Fig. 15 is a photograph showing a cross section of the silica gel, Fig. 16 is an enlarged photograph of a cross section of the template holes, and Fig. 17 is a photograph of a cross section along the longitudinal direction of the template holes. From Fig. 15, it is observed that the template holes are formed along the fibers of the comparative example also in Comparative Example 6, and in Fig. 15 and Fig. 16, many cracks connecting the template holes are observed. In addition, it is confirmed that white fibrous substances are remained in the template holes, and impurities of the fibers of the comparative example are not completely removed and are remained. Also, from Fig. 17, it is observed that many cracks are generated around the outer periphery of the template holes along the longitudinal direction, and furthermore, that many fibrous impurities of the fibers of the comparative example remain along the longitudinal direction. As with Comparative Examples 1 to 5, it is considered that the cracks were generated since the gel could not contract around the fibers of the comparative example during gel contraction associated with a polycondensation reaction, and the gel skeleton was split up.

In Comparative Examples 1 to 6, gel synthesis was carried out in the same production conditions as in Example 1, except that the fibers of the comparative example constituting the template are all different from the hollow fibers in Examples 1 to 10, but as described above, cracks or fractures are generated in all skeletons of the silica gel. It is inferred that the fibers of the comparative example could not contract in response to the gel contraction, thus stress was concentrated to the gel near the interface with the fibers of the comparative example or the like to generate the cracks or the like. On the other hand, in Examples 1 to 10, the hollow fibers could contract in response to the gel contraction, thus a monolithic porous body of a silica gel having a trimodal hierarchical porous structure could be synthesized without generating cracks or the like.

Hereinbelow, other embodiments of the method of the present invention will be described.

While hollow fibers and expanded fibers are used in the above embodiments, as the organic polymer fibers constituting the template used in the gelation step, the organic polymer fibers are not limited to hollow fibers and expanded fibers as long as they are those having a structure in which the cross section perpendicular to the longitudinal direction is contractible while the extension in the longitudinal direction is restricted.

In addition, while the case of using a spinodal decomposition sol-gel method in which a coexisting material having a function that induces a sol-gel transition and a phase separation in parallel is added is described in the above embodiments, a monolithic porous body having a trimodal hierarchical porous structure can be synthesized, also in the case of inducing a sol-gel transition and a phase separation in parallel without adding the coexisting material, by using the method of the present invention.

Also, while the case of synthesizing a monolithic porous body made of a silica gel or silica glass having a trimodal hierarchical porous structure is described in the above embodiments, the monolithic porous body is not limited to the silica gel or silica glass. For example, even in the case of a multicomponent monolithic porous body of a silica gel or silica glass containing a high-melting point oxide such as Al₂O₃, ZrO₂, and TiO₂, a monolithic porous body having a trimodal hierarchical porous structure can be synthesized by applying the method of the present invention.

Moreover, while examples that specify the specific numerical values (amount, temperature, time, dimension, number of fibers, etc.) are described in the above embodiments, the method of the present invention is not limited to the numerical conditions exemplified in the examples. Also, the detailed conditions are appropriately changed depending on the shape, size, and intended use of the finally synthesized monolithic porous body.

### INDUSTRIAL APPLICABILITY

The method for producing a monolithic porous body according to the present invention can be utilized for synthesizing a monolithic porous body having a trimodal hierarchical porous structure by a sol-gel method.

## Claims

1. A method for producing a monolithic porous body having a trimodal hierarchical porous structure by a sol-gel method comprising:
a sol preparation step of preparing a precursor sol;
a gelation step of inducing a sol-gel transition and a phase separation in parallel on the precursor sol in a gelation container housing a template obtained by configuring organic polymer fibers into an aggregation having a three-dimensional spread, to form a gel made of a co-continuous structure of a hydrogel phase and a solvent phase, in a space around the organic polymer fibers; and
a removal step of removing the solvent phase and the organic polymer fibers individually or simultaneously from the gel, wherein,
as a structure in which a cross section perpendicular to a longitudinal direction is contractible while extension in the longitudinal direction is restricted, the organic polymer fibers have voids inside the fibers, the voids being able to absorb compressive stress externally applied in a direction that the cross section contracts, and
template holes are formed of voids remaining after the organic polymer fibers are removed, through-pores are formed of voids remaining after the solvent phase is removed, and smallpores are formed in a skeleton of the hydrogel phase.

2. The method for producing a monolithic porous body according to claim 1, wherein each of the organic polymer fibers is a hollow fiber.

3. The method for producing a monolithic porous body according to claim 1 or 2, wherein a plurality of the organic polymer fibers are aligned in the longitudinal direction and bundled together to configure the template.

4. The method for producing a monolithic porous body according to any one of claims 1 to 3, wherein a porosity of the organic polymer fibers is larger than a volume contraction rate of the gel until the organic polymer fibers are removed.

5. The method for producing a monolithic porous body according to claim 2 or 3, wherein a porosity of the organic polymer fibers is not less than 36%.

6. The method for producing a monolithic porous body according to any one of claims 1 to 5, wherein a diameter of the template holes is larger than a diameter of the through-pores.

7. The method for producing a monolithic porous body according to claim 6, wherein the diameter of the template holes is not less than 10 µm.

8. The method for producing a monolithic porous body according to any one of claims 1 to 7, wherein a main component of the monolithic porous body is a silica gel or silica glass.

9. The method for producing a monolithic porous body according to any one of claims 1 to 8, wherein a coexisting material having a function that induces a sol-gel transition and a phase separation in parallel is added to the precursor sol.
